# EUROPEAN PATENT APPLICATION

(11) **EP 1 475 602 A1**
(43) Date of publication of application: **10.11.2004**
(21) Application number: 03010165.3
(22) Date of filing: 06.05.2003
(51) Int. Cl.: G01B 5/00, G01B 21/04, B21D 1/14, B23Q 3/00, B23Q 3/18, B25B 11/02

(54) **Method and system for production jig metrology**

(71) Applicant: Bayerische Motoren Werke Aktiengesellschaft, 80809 München (DE)
(72) Inventor: Vaughan, Tom, Reading, Berkshire, RG31 7RU (GB); Tallon, James, Warwickshire CV35 8AR (GB)

(57) **Abstract**

The invention relates to obtaining dimensional information about a production jig (1) wherein a plurality of reflective targets (25 to 29, 31 to 33) is fixed on the jig (1), each in a defined position, so that a reflective surface of the respective target (25 to 29, 31 to 33) is visible. At least some of the reflective surfaces are covered for use of the jig (1) in a production process. For measurement, the reflective surfaces are uncovered and the dimensional information about the jig (1) is obtained by irradiating radiation onto the reflective surfaces and by evaluating radiation reflected by the reflective surfaces.

## Description

The present invention relates to a method and a system for obtaining dimensional information about a production jig.

Production jigs are used in a variety of different production processes for holding material to be treated. In particular in the automotive industry, parts (such as individually shaped sheet metal parts) are firmly held by jigs in defined positions during treatment by robots, which may be equipped with welding and/or laser tools. For example, other metal parts can be attached to the part by spot-welding and/or holes can be cut into the part.

It is important that the part is precisely and firmly held in a desired position. In many cases, tolerances or deviations of only some tenth of a millimetre cannot be accepted. One precondition for high precision positioning is that the jig itself as well as any adjustable element of the jig are correctly positioned and aligned.

In order to achieve this goal it is known practice to place reflective targets in defined positions on the jig and to use at least one camera (in particular a highly accurate digital camera) to take pictures of the jig from various different directions. These pictures are then processed using a photogrammetry calculation system. As a result, it can be detected or determined whether the jig and its adjustable elements (if any) are correctly positioned or not.

The measurements are to be repeated from time to time in order to re-check the jig's position and alignment. However, placing the reflective targets in position is labour intensive and, therefore, costly. Further, especially during the manufacturing of metal parts using robots, the reflective targets are likely to be damaged by sparks and/or dust or, at best, their reflective properties deteriorate. This means that the targets have to be replaced and the measurement data processing system has to be re-calibrated or re-set for the jig.

It is an object of the present invention to provide a method and a system for obtaining dimensional information about a production jig that will allow a reduction of the effort of repeated measurements.

A method is provided of obtaining dimensional information about a production jig wherein a plurality of reflective targets is fixed on the jig, each in a defined position, so that a reflective surface of the respective target is visible; at least some of the reflective surfaces are covered for use of the jig in a production process; the reflective surfaces are uncovered; and the dimensional information about the jig is obtained by irradiating radiation onto the reflective surfaces and by evaluating radiation reflected by the reflective surfaces.

Further, a system is provided for obtaining dimensional information about a production jig, wherein the system comprises the jig and a plurality of reflective targets and wherein the reflective targets are fixed in defined positions on the jig so that a reflective surface of the respective target can be visible. The system is characterized by a plurality of cover elements wherein the cover elements, the jig and/or the reflective targets are adapted so that the cover elements can removably be fixed to the jig and/or to at least one of the reflective targets so as to cover at least some of the reflective surfaces.

By covering at least some, preferably all, of the reflective surfaces, the surfaces are protected, in particular against sparks, dust, dirt and other external influences. As a consequence, the targets can be used repeatedly in order to obtain the dimensional information several times. Although there is some additional effort when preparing the jig for measurement for the first time, the total effort for repeated measurement is much smaller. Practice tests of the method/system proved that a complete measurement using more than 20 targets can be performed within half an hour, including the time for removing cover elements before measurement and the time for replacing the cover elements after measurement.

Any cover element can be used that is suited to protect against the expected external influences. However, to protect targets on a surface of the jig against sparks or mechanical forces in particular, cover elements that are made of durable material (such as metal) are preferred. Further embodiments include plastic cover elements, preferably made of particularly durable and/or resistive plastic material. Alternatively, the plastic cover elements may be made of particularly cheap material, so that they can be replaced, e. g. every time when the reflective surfaces are covered, without increasing the costs significantly.

Often, the jig comprises at least one holding element for holding a part during the production process wherein a position of the holding element in relation to a base section of the jig can be adjusted. In this case, it is recommended that at least one of the reflective targets is fixed on each of the holding elements. Especially these reflective targets should be covered, since it can be expected that there are severe external influences in their region. On the holding elements in particular, it is preferred to manufacture a recess into the surface of the jig and to place at least one of the reflective targets inside the recess. By this, the reflective target is less exposed to the external influences. For example, the reflective target is adhered to a bottom of the recess.

The recess helps to protect the target. Further, it is easy to cover and uncover the recess, e.g. by using a cap, which can be fixed to the recess by non-positive locking, for example. Another advantage of the recess is that the target does not affect the surface level.

In a specific embodiment, the recess is a blind hole having a diameter greater than an overall dimension of the reflective target inside the hole. This allows placing a cover element on the hole so as to cover the hole and thereby to cover the reflective target inside the hole, wherein the cover element comprises a protrusion extending into a space between the reflective target and a sidewall of the hole. As a result, the space in the hole can be used to safely fix the cover element (e. g. a cap) to the jig. In the following, features and embodiments of the present invention are described in more detail by way of example. However, it is not intended to limit the scope of protection to the given examples. There will be references to the accompanying schematic figures, wherein
- Fig. 1: shows a side view of a production jig;
- Fig. 2: shows an individually coded reflective target;
- Fig. 3: shows a cross-section of a part of the production jig; and
- Fig. 4: shows a cross-section of another part of the production jig.

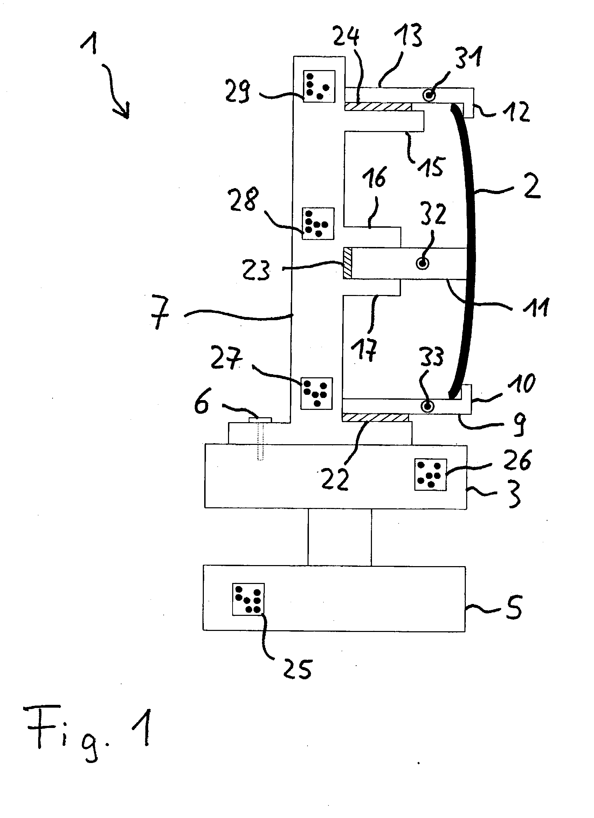

The production jig 1 shown in Fig. 1 comprises a base part 3 resting on a foot 5. From the base part 3, a carrier element 7 is extending upwards. The carrier element 7 is fixed to the base part 3 by means of screws 6 (one of which is shown in Fig. 1).

It comprises a plurality of means (e.g. arms 15, 16, 17), for carrying and/or positioning attached elements, such as holding elements 9, 10, 11 (e. g. made of polyester material, such as Mylar®) for holding a part 2 (e.g. a metal sheet) firmly in position. The position of the holding elements 9, 10, 11 can be adapted to the shape of the part 2 and/or to the desired position of the part 2 by means of positioning elements, in the example of Fig. 1 by means of shims 22, 23, 24. Fixing elements for fixing the positioning elements and/or the holding elements to the carrier element 7, (such as screws) are omitted in Fig. 1. Two of the holding elements, namely the holding elements 9, 13, comprise an L-shaped end 10, 12 to increase the number of contact points and/or contact regions between the part and the holding elements 9, 13.

In practice, the jig may comprise more holding elements and/or carrier elements in order to hold the part to be worked with, in particular to hold more complex shaped parts.

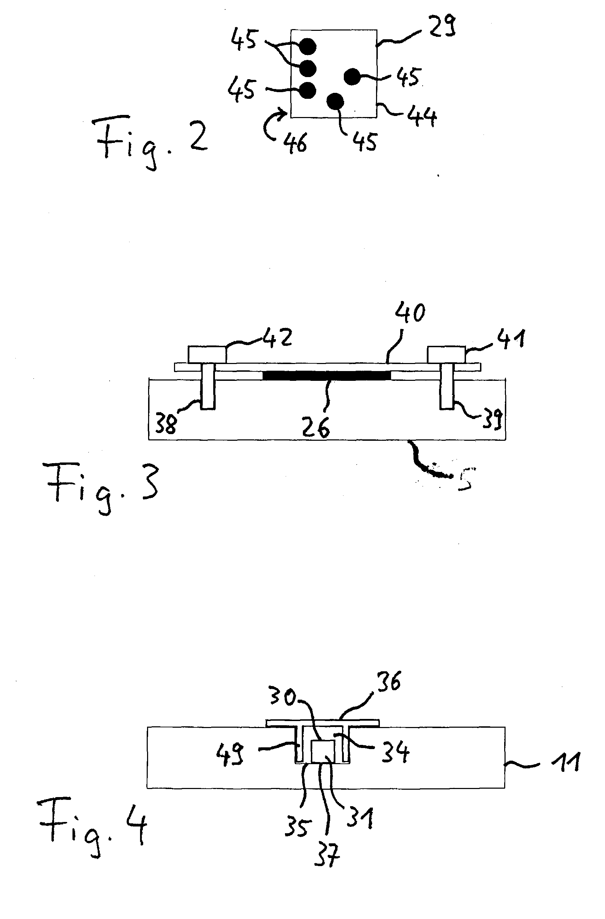

Reflective targets are attached to the foot 5, the base part 3 and the carrier element 7. These targets are individually coded by the arrangement of and/or the number of reflective (e.g. white) circular elements 45 on the target, as shown in Fig. 2 for the target 29. In particular, a carrier layer 44 of the targets is backed with a layer 46 of adhesive material (e.g. pressure-sensitive adhesive material).

As shown in Fig. 3, the targets (in the example: target 26) can be adhered to the surface of the jig (here: the base part 5). In order to cover the targets, a metal plate 40 can be fixed to the jig by means of screws 41, 42. The jig comprises respective threaded holes 38, 39.

As shown in Fig. 1 and Fig. 4, the holding elements 9, 11, 13 are equipped with reflective targets 31, 32, 33, which comprise a single circular reflective (e.g. white) surface 30. The reflective targets 31, 32, 33 are fixed by means of an adhesive layer 37 to a bottom 35 of a blind hole 34 in the jig. As shown in Fig. 4, a cap-like cover element 36 can be mounted so that the blind hole 34 and, thereby, the reflective element 31 are completely covered. In this specific embodiment, the cover element 36 comprises a ring-like protrusion 49, which extends into a space between the reflective target 31 and a sidewall of the hole 34.

Typically, there are no blind holes or recesses in the holding element when the jig is fabricated. Therefore, it is proposed to manufacture at least one hole or recess in every holding element before and/or after mounting the holding element for the first time on a jig.

The reflective targets 31, 32, 33 allow for an easy detection of any changes in the position of the holding elements 9, 11, 13 in relation to other parts of the jig, in particular in relation to the carrier element 7. Changes due to a removal and/or replacement of one or more than one positioning element (shims 22, 23, 24) can be recognized by evaluating radiation reflected by the reflective targets 31, 32, 33 and by at least one of the coded reflective elements 25 to 29.

Further, existing datum holes (e.g. in an upper surface of the base part 3) can be used in the same manner: a reflective target may be placed inside the hole and the reflective target as well as the hole may removably be covered for use of the jig in production.

The system and the method of the present invention allow a fast, accurate and repeatable measurement of dimensional information of production jigs. Practice tests have proven that a repeatability of 0.1 to 0.2 mm can be achieved. Further, the system is inexpensive and easy to install. In particular, the costs for the manufacture/purchase of the cover elements (e.g. metal plates and plastic caps) are low. It is preferred that the reflective targets are fixed to the jig or its parts and that the respective cover elements are provided or manufactured before the jig or part thereof is used in production for the first time. However, later modifications on the positions of the reflective targets can also be performed at low costs.

## Claims

1. A method of obtaining dimensional information about a production jig (1) wherein
a plurality of reflective targets (25 to 29, 31 to 33) is fixed on the jig (1), each in a defined position, so that a reflective surface (30, 45) of the respective target (25 to 29, 31 to 33) is visible;
at least some of the reflective surfaces (30, 45) are covered for use of the jig (1) in a production process;
the reflective surfaces (30, 45) are uncovered; and
the dimensional information about the jig (1) is obtained by irradiating radiation onto the reflective surfaces (30, 45) and by evaluating radiation reflected by the reflective surfaces (30, 45).

2. The method of claim 1 wherein the jig (1) comprises at least one holding element (9, 11, 13) for holding a part (2) during the production process, wherein a position of the holding element (9, 11, 13) in relation to a base section (3) of the jig (1) can be adjusted and wherein at least one of the reflective targets (31 to 33) is fixed on each of the holding elements (9, 11, 13).

3. The method of claim 1 or 2 wherein a recess (34) is manufactured into the surface of the jig (1) and wherein at least one of the reflective targets (31 to 33) is placed inside the recess (34).

4. The method of claim 3 wherein the recess (34) is a blind hole having a diameter greater than an overall dimension of the reflective target (31 to 33) inside the hole, wherein a cover element (36) is placed on the hole so as to cover the hole and thereby to cover the reflective target (31 to 33) inside the hole.

5. The method of claim 4 wherein the cover element (36) comprises a protrusion (49) extending into a space between the reflective target (31 to 33) and a side wall of the hole.

6. The method of one of the preceding claims wherein at least one of the reflective surfaces (30, 45) is covered by a sheet-like element (40), in particular a sheet metal.

7. A system for obtaining dimensional information about a production jig (1), wherein the system comprises the jig (1) and a plurality of reflective targets (25 to 29, 31 to 33) and wherein the reflective targets (25 to 29, 31 to 33) are fixed in defined positions on the jig (1) so that a reflective surface (30, 45) of the respective target (25 to 29, 31 to 33) can be visible;
**characterized by** a plurality of cover elements (36, 40) wherein the cover elements (36, 40), the jig (1) and/or the reflective targets (25 to 29, 31 to 33) are adapted so that the cover elements (36, 40) can removably be fixed to the jig (1) and/or to at least one of the reflective targets (25 to 29, 31 to 33) so as to cover at least some of the reflective surfaces (30, 45).

8. The system of claim 7 wherein at least one of the cover elements (36, 40) is a sheet-like element (40), in particular a sheet metal.

9. The system of claim 7 or 8 wherein at least one of the cover elements (36, 40) is a cap (36) which is adapted to fit on a hole in the jig (1).

10. The system of one of claims 7 to 9 wherein at least one of the reflective targets (25 to 29, 31 to 33) is placed inside a hole of the jig (1) so that the reflective surface (30) of the target (31 to 33) may be visible from outside the hole.
